# EUROPEAN PATENT APPLICATION

(11) **EP 1 965 527 A2**
(43) Date of publication of application: **03.09.2008**
(21) Application number: 08102150.3
(22) Date of filing: 29.02.2008
(51) Int. Cl.: H04H 60/46

(54) **IPTV receiver and methods for processing rating information in the IPTV receiver**

(30) Priority: 02.03.2007 KR 20070021189
(71) Applicant: LG Electronics Inc., Seoul 150-721 (KR)
(72) Inventor: Song, Jae Hyung, 137-724, SEOUL (KR); Kim, Jin Pil, 137-724, SEOUL (KR)
(74) Representative: Cabinet Plasseraud

(57) **Abstract**

A method for rating information in an IPTV receiver may includes downloading content and first rating information identifying rating values of the content, wherein the first rating information includes information identifying whether the first rating information is newly downloadable, downloading second rating information defining rating types defined for rating systems in accordance with the received first rating information, wherein the second rating information includes information identifying whether the second rating information is downloadable, and decoding the received content, the first rating information, and the second rating information.

## Description

This application claims the benefit of the Korean Patent Application No. 10-2007-0021189, filed on March 2, 2007, which is hereby incorporated by reference as if fully set forth herein.

### BACKGROUND OF THE INVENTION

### Field of the Invention

The present invention relates to rating information, and more particularly, to an IPTV receiver and methods for processing the rating information in IPTV receiver.

### Discussion of the Related Art

Generally, in a conventional television (hereinafter abbreviated TV) system, contents produced by a broadcasting station are transmitted via a radio wave transfer medium such as a terrestrial broadcast, a cable broadcast, a satellite broadcast and the like. Viewer is then able to view the contents via TV receiver capable of the respective media.

As digital TV technology has been developed and commercialized from the conventional analog broadcasting, various service providers start to provide IPTV broadcasting services for various contents including real-time broadcast, CoD (Contents on Demand), games, news and the like via Internet network spreading to every home as well as the conventional radio wave media.

IPTV service can be mainly divided into live media broadcast/linear broadcast TV and contents on demand. Thus, the IPTV service is discriminated into the two types and considerably characterized in providing a user with contents more various than those of the conventional analog or digital TV service.

Hence, necessity for conditional access via video ratings (or content ratings) according to user ages is more essential to IPTV service rather than the conventional TV services.

In the conventional analog TV broadcasting, video ratings are set for contents and information corresponding to reference level only is provided to a user. As digital TV becomes commercialized, video ratings are substantially applied to contents.

In U.S.A., a method for applying video ratings for U.S.A., Canada, Taiwan and Korea is defined using RRT (rating region table) of PSIP (program and system information protocol). And, a conditional access function to contents is mandatory for digital TV receivers using the RRT. However, rating scheme in IPTV environment more diverse and complicated than the conventional broadcasting environments is not yet defined. Hence, how to transmit/receive contents becomes a problem.

### SUMMARY OF THE INVENTION

Accordingly, the present invention is directed to an apparatus for transmitting and receiving a rating scheme in an IPTV environment and method thereof that substantially obviate one or more problems due to limitations and disadvantages of the related art.

An object of the present invention is to provide an IPTV receiver and methods for processing rating information in the IPTV receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for rating information in an IPTV receiver may includes downloading content and first rating information identifying rating values of the content, wherein the first rating information includes information identifying whether the first rating information is newly downloadable, downloading second rating information defining rating types defined for rating systems in accordance with the received first rating information, wherein the second rating information includes information identifying whether the second rating information is downloadable, and decoding the received content, the first rating information, and the second rating information.

In accordance with another aspect of the invention, a digital content receiving apparatus includes an interface which transmits/receives an IP packet; an IP manager which accesses a service discovery record including service event information through the interface and receives and processes the service discovery record according to an IP; a service discovery manager which parses the service discovery record and obtains service event information; a decoding unit which decodes the digital contents output from the interface; a controller which controls the service event information parsed by the service discovery manager and the decoded digital contents to be output; and an output unit which outputs at least one of the service event information and the digital contents according to a control signal of the controller.

In accordance with another aspect of the invention, a method for processing rating information in an IPTV receiver may include downloading first rating information defining rating types defined for rating systems, wherein the first rating information includes information identifying whether the first rating information is newly downloadable, downloading content and second rating information identifying rating values of the content, wherein the second rating information includes information identifying whether the second rating information is downloadable, and decoding the received content, the first rating information, and the second rating information.

In accordance with another aspect of the invention, an IPTV receiver may include an interface for transmitting/downloading IPTV packets via the connected network; a demultiplexer for demultiplexing the downloaded IPTV packets, wherein the demultiplexed IPTV packets includes content, first rating information identifying rating values of the content, and second rating information defining rating types defined for rating systems in accordance with the first rating information, wherein the first rating information includes information identifying whether the first rating information is newly downloadable and the second rating information includes information identifying whether the second rating information is newly downloadable; a decoder for decoding the demultiplexed content, the first rating information, and the second rating information; and a controller for controlling to decode the content, the first rating information, and the second rating information.

Preferably, the IPTV receiver further includes a storage medium for temporarily storing the decoded content, the first rating information, and the second rating information; and a display unit for displaying the decoded content.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram to explain IPTV environment;

FIG. 2 is an exemplary diagram of information on Rating Scheme (RS) in IPTV environment according to one embodiment of the present invention;

FIG. 3 is an exemplary diagram of information on RS in IPTV environment according to another embodiment of the present invention;

FIG. 4 is an exemplary diagram of metadata configuration about Content Rating (CR) according to one embodiment of the present invention;

FIG. 5 is an exemplary diagram of metadata configuration about CR according to another embodiment of the present invention;

FIG. 6 is an exemplary block diagram to explain concept for transmission and reception in PUSH mode according to one embodiment of the present invention;

FIG. 7 is an exemplary flowchart of a process the in PUSH mode shown in FIG. 6;

FIG. 8 is an exemplary block diagram to explain concept for transmission and reception in PULL mode according to one embodiment of the present invention;

FIG. 9 is an exemplary flowchart for a process for receiving and processing information on a RS transmitted in the PULL mode shown in FIG. 8 according to one embodiment of the present invention;

FIG. 10 is an exemplary flowchart of a process for processing information on a downloadable RS according to one embodiment of the present invention;

FIG. 11 is an exemplary flowchart of a process for processing information on a downloadable RS according to another embodiment of the present invention; and

FIG. 12 is an exemplary block diagram of IPTV receiver according to one embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing method and apparatus for transmitting and receiving rating information according to the present invention, IPTV (Internet Protocol TeleVision) environment is explained as follows.

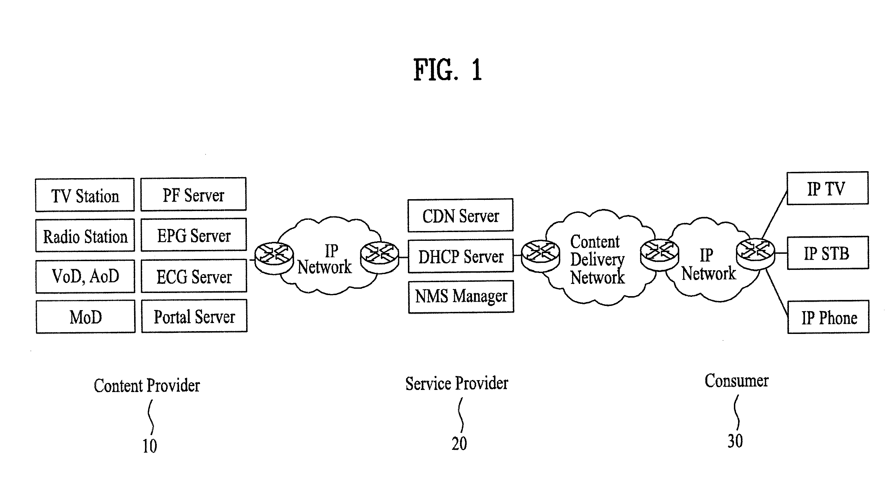

First, the IPTV environment will be described. FIG. 1 is an exemplary diagram of the IPTV environment.

The IPTV environment or whole system largely includes a program provider (PP) 10, a service provider (SP) 20, and a customer 30. At this time, the program provider (PP) 10 is also called a platform provider and the customer 30 is also called a consumer.

The program provider (PP) 10 is a large group for providing all services and data for a broadcasting program.

The service provider (SP) 20 transmits multimedia data to the customer 30, maintains, repairs and manages a delivery network in order to provide a stable reception environment of the customer 30. And, the service provider (SP) 20 provides foundation equipments and functions for network transmission to the program provider (PP) 10.

The customer 30 reproduces the received data using the foundation equipments such as a cable or an x digital subscriber line (xDSL) and immediately responds to the request of a user. The customer 30 includes as an IPTV, an IP set-top box (IP STB), and an IP phone, all of which are manufactured by manufacturers for manufacturing an IPTV. The IP phone may provide a phone service if the IP phone includes an IPTV receiver function. Hereinafter, each of the groups having different functions will be described in detail.

First, the Program Provider (PP) 10 includes, for example, a TV station, a radio station, a Video-on-Demand/Audio-on-Demand (VoD/AoD) service, a Music-on-Demand (MoD) service, a Packet Filter (PF) server, an Electronic Program Guide (EPG) server, an Electronic Content Guide (ECG) server, and a portal server, each of which will now be described.

The TV station includes a terrestrial broadcasting station or a cable broadcasting station. The TV station creates and stores a broadcasting program which can be viewed by users, converts the broadcasting program into a digital signal, and transmits the digital signal in a variety of broadcasting formats. The radio station generally operates without a video channel. Alternatively, the radio station may include a video channel.

The VoD/AoD service has characteristics different from those of the TV station and the radio station. The Program Provider (PP) 10 generally stores a program to be broadcasted, but cannot rewind or stop a successive live broadcasting program without recording the program. In contrast, the VoD/AoD service may store, reproduce and provide a broadcasting program, movie, or music desired by a user. For example, when a user cannot view a broadcasting program in real time, the user may access a site for providing the broadcasting service, download a file, and immediately reproduce the file. The AoD service also provides a function for allowing a user to listening to an audio program in real time when the audio program is unlikely to be recorded. The MoD service may provide a function for allowing a user to download and listen to favorite music. The MoD service is similar to the AoD service, except that the service target thereof expands by allowing a record company or a record distributor to expand the existing web service.

The PF server may be provided by an enterprise for managing all broadcasting information and location information provided by the Program Provider (PP) 10. The PF server provides the broadcasting schedule of the TV station and/or Audio station (hereinafter, referred to as a broadcasting station), location information necessary for broadcasting, and information related to the access of a user.

Accordingly, the PF server should necessarily provide a corresponding service in the IPTV environment and, in this time, the broadcasting station should include the PF server. If the broadcasting station does not include the PF server in the IPTV environment, a user may not access the broadcasting station. The customer 30 should process information received via the service provided by the PF server and display the information on a screen.

The EPG server provides a service for allowing a user to access about broadcasting programs according to time zones or channels, which is a representative service provided by a TV guide company. The EPG server allows a program to be automatically installed and executed in the customer 30.

The customer 30 may receive the service provided by the PF server to obtain only information about a corresponding broadcasting station or receive the service provided by the EPG server to simultaneously obtain information about the real-time broadcasting channels of all broadcasting stations. For example, the customer 30 may receive the EPG service provided by the EPG server to reserved-record CNN news or reserved-view Disney broadcasting. Accordingly, the EPG server should provide information about broadcasting programs of a specific area according to time zones.

In particular, the EPG service may search the contents of a drama, confirm the category of the drama, such as a Science Fiction (SF), a drama, or an animation, and provide detailed information about the plot or the characters of a broadcasting program, for example, a drama or movie. The customer 30 may access the EPG service using an EPG key included in a remote controller.

The ECG service provided by the ECG server allows a user to conveniently use information about the contents which the Program Provider (PP) 10 is having, the location of an accessed server, and access rights. At this time, the ECG service may provide a function, which allows the user to easily access a server for having contents, and detailed information about the contents. That is, the ECG service is not a real-time service and provides a combination of the VoD/AoD service and the MoD service similar to the EPG service, thereby reducing the burden that the user individually accesses the server in order to view or download contents via any content service.

The ECG service does not provide the user with real-time broadcasting channel information, unlike the EPG service. That is, the ECG service provides information about broadcasting channel, which is previously stored in the server, such that the user can conveniently view, download, and store the contents any time.

For example, the user should access a PF server having a difficult address to obtain information about the server for providing contents, which is an effort- and time consuming process. However, when the user applies for the ECG service using an ECG button included in the remote controller, the user can collect all contents via an ECG program which is automatically installed, check information about the contents, access only a desired server, and obtain desired data, thereby consulting user's own convenience.

The service provided by the portal server is a web service provided by each broadcasting station and may provide information necessary for the connection to the web server of each broadcasting station or enterprise for providing contents. The portal server may search a list of programs provided by each broadcasting station or Program Provider (PP) 10 for providing a content service and may provide an EPG function or an ECG function.

Since the portal service has a function such as a user authentication or a license contract, the user needs to access the portal service in order to view a desired program. In addition, the ECG or EPG service provides a list of unified broadcasting programs or contents, but the portal service provides information about the list of broadcasting programs or contents of the Program Provider such that detailed searching is possible. The user may easily access the portal service using a remote controller.

Up to now, the services provided by the Program Provider (PP) 10 were described. The broadcasting stations or the servers should access the Internet so as to transmit programs in real time or transmit broadcasting information.

The broadcasting stations or the servers should include a system which is connected to the network of the Service Provider (SP) 20 to transmit multimedia data without an error or delay, using an Internet (real-time) protocol, such as a Real-time Transport Protocol (RTP), a Real-Time Streaming Protocol (RTSP), a resource reservation protocol (RSVP), or a Multi-Protocol Label Switching (MPLS).

For example, a specific server transcodes multimedia data in conformity with the IPTV environment, attaches the RTP/UDP (User Datagram Protocol) including time information to the multimedia data in conformity with caption or lip-sync, and sends the multimedia data to an IP network provided by the Service Provider (SP) 20, such that the Program Provider (PP) 10 transmits the multimedia data in real time according to the Moving Picture Experts Group-2 (MPEG-2) method and/or the Audio Coding-3 (AC-3) method in the IPTV environment.

The Service Provider (SP) 20 provides the bandwidth and the stability of the network such that multimedia data and/or broadcasting data received from the Program Provider (PP) 10 by the above-described process can be transmitted.

The Service Provider (SP) 20 may provide an IPTV service using the existing cable network. However, in this case, the Service Provider (SP) 20 should change the equipments of a delivery network. That is, the Service Provider (SP) 20 includes network equipments for transmitting data in real time and considers the bandwidth of the customer 30.

The Service Provider (SP) 20 should process a large amount of multimedia data to reduce the bandwidth using the equipments and a multicast service which is a basic network service of the IPTV receiver. However, when the Service Provider (SP) 20 cannot sufficiently ensure the bandwidth, the Service Provider (SP) 20 may transcode the multimedia data and/or the broadcasting data received from the Program Provider (PP) 10 or the optical cable network again and converts the multimedia data and/or the broadcasting data into the format such as MPEG-4 or MPEG-7.

In this case, the Service Provider (SP) 20 may include a Network Management System (NMS) manager, a Dynamic Host Control Protocol (DHCP) server, and a Content Delivery Network (CDN) server.

The NMS manager manages the delivery network between the Service Provider (SP) 20 and the customer 30 and an IPTV receiver of the customer 30. For example, the Service Provider (SP) 20 can confirm that the customer 30 cannot normally receive a broadcasting program due to any problem in the delivery network from the NMS manager and must include an emergency means for solving the problem.

The NMS manager is widely used as the standardized means for controlling and managing remote machines of a transport layer. That is, the Service Provider (SP) 20 can check how much traffic occurs with respect to any broadcasting program and an area where the bandwidth is insufficient, from the NMS manager.

The Service Provider (SP) 20 should provide the Program Provider (PP) 10 with the service of the NMS manager such that a group can be created and managed at the time of providing the multicast service. This is because the Program Provider (PP) 10 may further create a multicast group in a special case. The DHCP server may automatically allocate an IP address to the IPTV receiver of the customer 30 and notify the address of the CDN server to the IPTV receiver. The DHCP server is used as means for allocating the IP address to a personal computer (PC) even in a general network.

That is, the Service Provider (SP) 20 transmits the accessible address to the IPTV receiver which can be used from the DHCP server such that a user performs a registration procedure upon initial access. The Service Provider (SP) 20 may provide the Internet Protocol version 4 (IPv4) or the Internet Protocol version 6 (IPv6) to the IPTV receiver in the IPTV environment. That is, the IPTV receiver for providing the IPv4 may be used.

The CDN server provides CDN information and the IP address when the IPTV receiver is turned on and initially operated. The CDN information contains the registration or authentication of the user and the PF information. Accordingly, the IPTV receiver cannot receive the broadcasting program when the CDN information cannot be received from the Service Provider (SP) 20.

The customer 30 includes various forms of IPTV receivers. If the user has a general TV receiver, the user rents an IPTV STB to enjoy an IPTV broadcasting service with low cost. In addition, the user may apply for an IP phone to the Service Provider (SP) 20 with low additional service cost.

The IPTV receiver includes a network interface to access the network, receives a data packet using the IP, and reproduces multimedia data on a screen of the IPTV receiver. The IPTV receiver rapidly transmits the data packet over the network and receives information from the server, by manipulating the remote controller. That is, the IPTV receiver should bi-directionally transmit the request of the user while processing the multimedia data.

An external input device such as a remote controller should include a function button for an IPTV broadcasting service so as to provide a bi-directional service. Accordingly, the user can store and view a fantastic scene of a drama using the external input device and use an additional service such as location information or hotel reservation.

The NMS manager controls and manages the delivery network and the IPTV receiver. The range of the broadcasting service will be further expanded and the additional service will increase in the future in the IPTV environment. If the number of IPTV receivers will rapidly increase and the number of additional services will further increase, the role of the NMS manager will become important.

Accordingly, the Service Provider (SP) 20 and the IPTV receiver may use the SNMP due to the above-described environment. That is, the Service Provider (SP) 20 may check in detail statistical data of the protocol which is currently used by the IPTV receiver, information about the used processor, or a TV manufacturer name, using the SNMP protocol.

The SNMP is an application layer protocol for efficiently controlling and managing the equipments or the servers connected to network, which is currently upgraded from Version 1 to Version 3 and is continuously being upgraded for security.

IPTV environment are explained as follows. First of all, as mentioned in the foregoing description, information associated with ratings has been provided by the related art terrestrial, cable or satellite broadcasting. For instance, Rating Region Table (RRT) has been provided in North America or a parental rating descriptor has been provided in Europe. Yet, the corresponding information has been mostly limited. According to the present disclosure, information associated with ratings, which is defined by a method more diverse than that handled by a receiver in a related art broadcasting environment, can be received in IPTV environment. For instance, a receiver in North America receives RRT only. And, a receiver in Europe mostly receives a parental rating descriptor. Yet, in IPTV environment, a receiver in Asia is capable of receiving the North American RRT and/or the European parental rating descriptor. In this case, the receiver needs to handle the received RRT or parental rating descriptor to control contents viewing.

In the following description, embodiments for transmitting and receiving rating information in the above-described IPTV environment are explained in details. At this time, the rating information in the present disclosure may include Rating Scheme (RS) and Content Rating (CR). In a method of transmitting and receiving information on RS and CR according to one embodiment of the present invention, the information on the RS and the CR is transmitted and received in metadata format. For clarity and convenience of the following description, the information on the RS is included in EPG metadata and then transmitted/received for example. Moreover, for clarity and convenience of the following description, the information on the RS and the CR relates to North America video rating system for example.

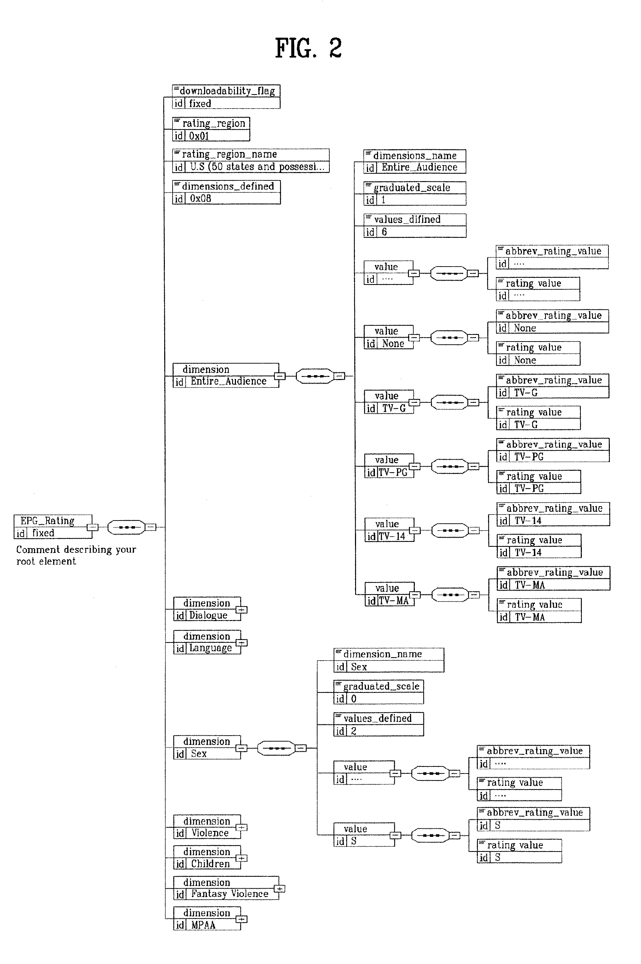

First of all, information on RS is explained as follows. FIG. 2 is an exemplary diagram of information on RS in IPTV environment according to one embodiment of the present invention. FIG. 2 shows an example of information on a fixed RS.

Information on the fixed RS configured in metadata format according to one embodiment of the present invention includes at least one of downloadability flag element, rating_region element and dimension element.

The downloadability_flag element is the information indicating whether information on a corresponding RS is a fixed RS or a downloadable RS. In this case, the downloadability_flag element is defined in association with or regardless of a value of the rating_region element

For instance, in a video rating system which is information on North American RS, the rating_region element value is defined beforehand. In particular, if the rating_region element value is '0x01', it is defined to indicate information on a RS applied to U.S.A. (US-50 states + possessions). If the rating_region element value is '0x02', it is defined to indicate information on a RS applied to Canada. If the rating_region element value is '0x03', it is defined to indicate information on a RS applied to Taiwan. If the rating_region element value is '0x04', it is defined to indicate information on a RS applied to Korea. If the rating_region element value is '0x05', it is defined to indicate information on a downloadable RS.

Hence, if the rating_region element value contained in the information on the RS configured according to the present invention is '0x01'~'0x04', information on the corresponding RS is the information about a fixed RS. In this case, the downloadability_flag element can have a value that indicates the information about the fixed RS. Yet, if the rating_region element value is '0x05', the information about the corresponding RS is the information about the downloadable RS. In this case, the downloadability_flag element will have a value indicating the information about the downloadable RS.

Rating value actually used in a region corresponding to the rating_region element value is defined as a dimension in North America for example. For clarity and convenience, it is named a dimension in this disclosure. Yet, the rating value is not limited to the name. And, it is to be understood that the presence invention is construed by referring to the meaning indicated by the name.

The dimension_defined element indicates the number of dimension elements according to the rating_region element value. In FIG. 2, the dimension_element is set to '0x08' to indicate that there are eight dimension elements.

The dimension elements, as shown in FIG. 2, include 'Entire_Audience', 'Dialogue', 'Language', 'Sex', 'Violence', 'Children', 'Fantasy Violence' and 'MPAA'. These are exemplary and dimensions, which are previously defined according to the rating_region element values and used in the corresponding region, will be included.

Each of the dimension elements can be provided with a detailed dimension value necessary for controlling contents viewing. And, the detailed dimension values, as shown in FIG. 2, include a dimension value of 'Entire-Audience' dimension element and a dimension value of 'Sex' dimension element for example.

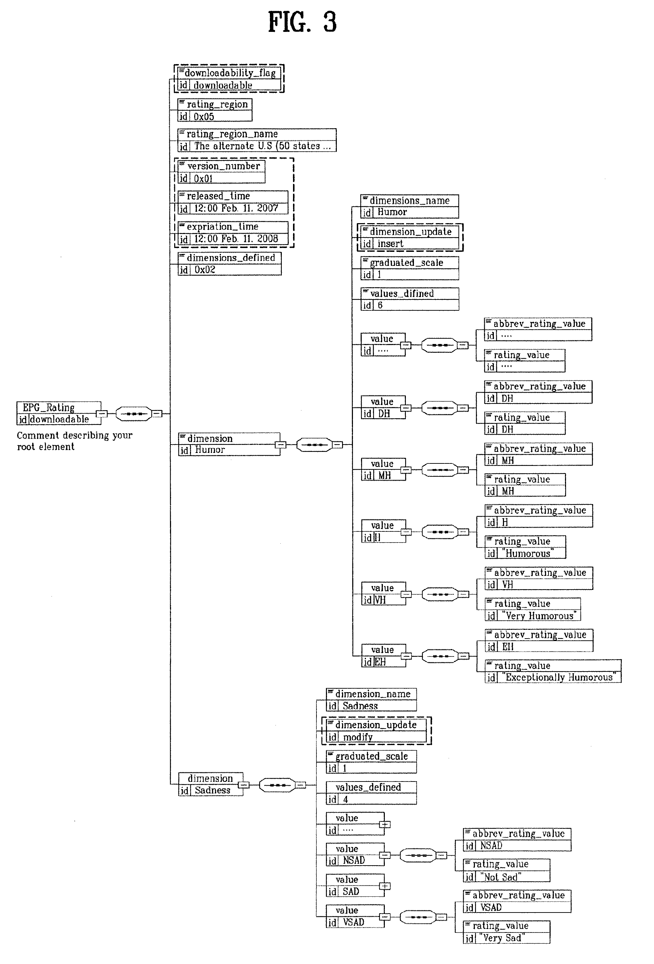

FIG. 3 is an exemplary diagram of information on RS in IPTV environment according to another embodiment of the present invention. FIG. 3 shows an embodiment for configuring information about a downloadable RS instead of the information about the fixed RS shown in FIG. 2. Hereinafter, description of a part overlapped with the aforesaid description of FIG. 2 is quoted from the description of FIG. 2 and a part different from that of FIG. 2 is mainly explained. Basically, the information about the downloadable RS shown in FIG. 3 has a configuration similar to that of the information about the fixed RS shown in FIG. 2 and further includes elements for providing more accurate information in association with characteristics of the information about the downloadable RS.

For instance, the information about the downloadable RS can include at least one of version_number element, released_time element, released_version element and expriation_time element and can be diversely configured with combinations of the respective elements. Each of the combinations can be one of detailed embodiments to explain the technical idea of the present invention.

FIG. 3 shows an example that the version_number element, the released_time element and the expriation_time element are included. Besides, dimension_update element is further included in a dimension element, which is changed, among at least one or more dimension elements in accordance with the rating_region element to indicate an update state of the corresponding dimension element.

In FIG. 3, a value of the rating_region element is '0x05' different from that in FIG. 2, and rating_region_name information is represented as 'The alternate U.S. (50 states ...' to indicate that it is downloadable. Hence, a receiver is able to determine that the information about the RS downloaded via the rating_region element or downloadability_flag element associated with the rating_region element is the information about the downloadable RS.

In case of the information about the fixed RS shown in FIG. 2, version is not changed but fixed. So, the version_number element is unnecessary. Yet, in case of the information about the downloadable RS, the version_number element is necessary to decide whether to use a downloaded RS through comparison with a previously provided RS.

In particular, the receiver decides whether the received RS is a fixed RS or a downloadable RS in a manner of parsing downloadability_flag element and/or rating_region element of information about a RS transmitted by being included in EPG metadata. As a result of the decision, if the received RS is the downloadable RS, the receiver decides whether to use the information about the received RS by parsing the version_number element and then comparing it with version_number element off the previously provided rating scheme. Hence, the receiver is always able to keep the information about the RS used for viewing restriction as a latest version.

The released_time element indicates a released date of information about a corresponding RS. The released_version element indicates a released version of information about a corresponding RS. Hence, the receiver is able to keep its RS as a latest one by parsing the released_time element or the released_version element and then utilizing the parsed one in the same manner of the aforesaid version_number element.

The expiration_time element indicates valid time information on information about a corresponding RS. In particular, the expiration_time element indicates a sort of update restriction period, valid period or absolute period to prevent user's confusion or reduction of reliability on a RS due to frequent updates of information about a RS for viewing restriction.

Subsequently, the receiver decides whether an update restriction period expires according to the time information on the expiration_time element. As a result of the decision, only if it expires, the receiver enables the information about the received RS to be updated. Hence, it is able to discard information about a RS received before expiration even if the corresponding version information, released time information or released version information is the latest.

Basic contents of the dimension element are quoted from the description of FIG. 2. In this case, the information about the downloadable RS shown in FIG. 3 can include dimension_update element in each dimension element. If dimension_update element is not necessary for a corresponding dimension element, it may not be included.

The dimension_update element can include at least one selected from the group consisting of information on a presence or non-presence of validity of a corresponding dimension element, information on a change of each dimension element value, information on a deletion of each dimension element value, information on an appending of each dimension element value and information on an insertion of each dimension element value. In this case, the appending means an addition to a last portion of a preset dimension element value and the insertion means an addition to a middle portion of the preset dimension element value.

So, the receiver decides a presence or non-presence of validity of a corresponding dimension element by parsing dimension_update element, decides whether states of dimension element values are changed in case of the presence of the validity as a result of the decision, and then performs corresponding updates. If it is unable to change the state of the dimension information, the information about the RS is unnecessarily increased. Hence, this problem can be solved by the updates.

In the above description, in transmitting/receiving the information about the RS, the information is transmitted/downloaded in metadata format by being included in EPG metadata for example.

In the following description, explained is transmission/downloading of information about a CR for each content. In this case, the information about the CR is transmittable/receptible by a method similar to that of the information about the RS. In particular, in transmitting/receiving the information on the CR, the present invention takes transmission in metadata format as one embodiment. For clarity and convenience, the information about the CR is included in EPG metadata and then transmitted/received for example.

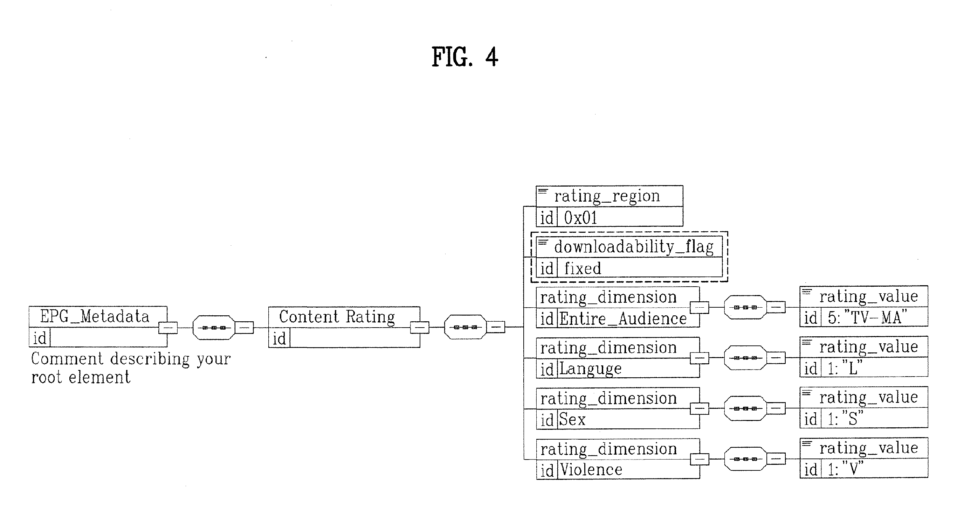

FIG. 4 is a diagram of metadata configuration about content rating (CR) according to one embodiment of the present invention. In FIG. 4, information about a CR on an individual content is configured in a metadata format in association with dimension element of the information about the fixed RS shown in FIG. 2.

In the present invention, the information about the CR is transmitted and downloaded in metadata format and the basic concept is identical to that of the above-mentioned information about the RS in the metadata format. So, the relevant material is quoted from the former description thereof. In FIG. 4, rating_region element has a value indicating a fixed case. And, downloadability_flag element can have a value indicating information about a CR associated with the rating_region element value or a separately fixed CR.

And, dimension element has a detailed dimension value of a corresponding content in accordance with the rating_region element value. For instance, a content shown in FIG. 4 is associated with four dimension elements including Entire_Audience, Language, Sex and Violence. And, FIG. 4 exemplarily shows a case that the four elements have detailed dimension values, respectively.

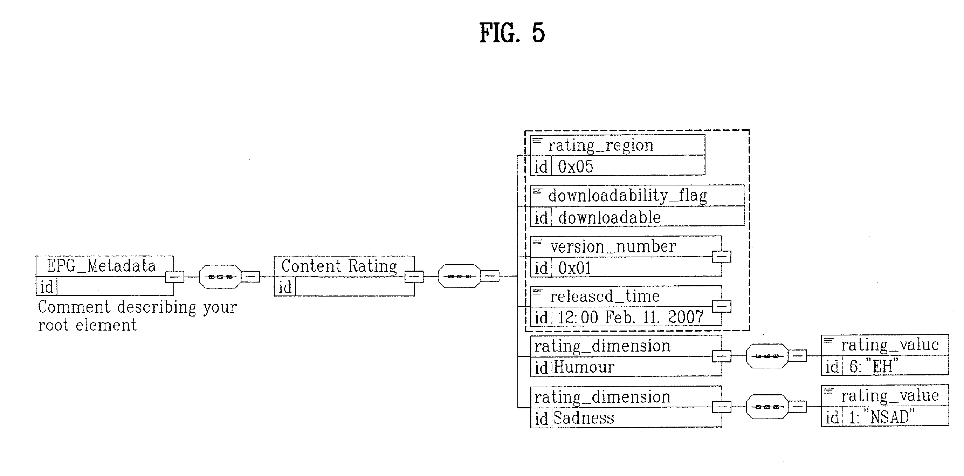

FIG. 5 is a diagram of metadata configuration about content rating (CR) according to another embodiment of the present invention. FIG. 5 shows an example that information about a CR on an individual content is configured in a metadata format in association with dimension information on information about a downloadable RS as shown in FIG. 3. In formation about a downloadable CR can include at least one of version_number element, released_time element and released_version element as well as the information about the fixed content rating shown in FIG. 4.

FIG. 5 shows one embodiment that version_number element and released_time element are further included in the configuration shown in FIG. 4.

As mentioned in the foregoing description, a value of rating_region element is set to '0x05' to indicate 'downloadable'. In order to be interconnected to the rating_region element value or to indicate that information about a corresponding CR is downloadable in a transmitting end, downloadability_flag element includes a value that indicates 'downloadable'.

The version_number element, the released_time element and the released_version element can have the same meanings of the above-mentioned corresponding elements shown in FIG. 3.

In the above descriptions of FIG. 2 and FIG. 3 for embodiments of the present invention, information about entire rating scheme is configured in metadata format. In the above descriptions of FIG. 4 and FIG. 5 for embodiments of the present invention, information about each CR is configured in metadata format.

In the following description, explained is transmission and reception of the metadata-formatted information about RS and CR. In the present invention, when data is transmitted and received in IPTV environment, there are PUSH mode and PULL mode. A process for transmitting/receiving and processing information about a RS and information about a CR in each of the modes according to an embodiment of the present invention is explained as follows.

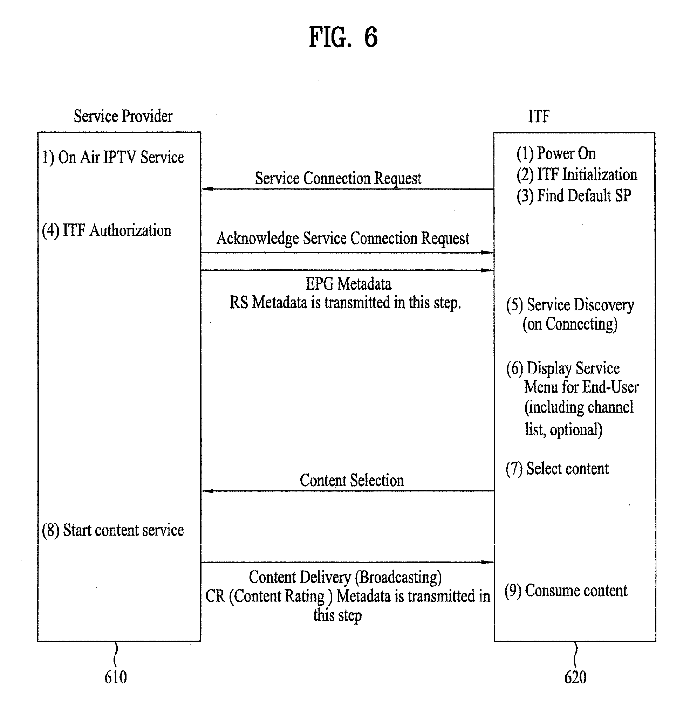

FIG. 6 is a block diagram to explain concept for transmission and reception in PUSH mode according to one embodiment of the present invention.

The PUSH mode generally corresponds to a case that a transmitter unilaterally transmits a broadcast like the conventional broadcasting. In the following description, explained is the concept that a Service Provider (SP) 610 corresponding to a transmitter transmits metadata about the RS to an IPTV receiver 620 corresponding to a receiver according to the PUSH mode.

If the IPTV receiver 620 is turned on and initialized, it makes a service connection request by accessing a network and then searching for a defaulted Service Provider (SP) 610.

The SP 610 providing a corresponding IPTV service authenticates the corresponding receiver in response to the service connection request made by the IPTV receiver 620 and then transmits a corresponding acknowledgement signal and the information about the RS configured according to the present invention to the authenticated IPTV receiver 620 by having the signal and information included in EPG metadata.

The IPTV receiver 620 searches for the connected service and then displays a service menu to a user. In this case, the displayed service menu can contain a channel list and options. If the user selects a specific content from the displayed service menu, the IPTV receiver 620 makes a request for a service of the corresponding content to the SP 610.

The SP 610 receives the request from the IPTV receiver 620 and then delivers the service for the corresponding content via broadcasting to start the content service. In doing so, it is able to transmit information about a CR together with the delivered content.

The IPTV receiver 620 is able to set a presence or non-presence of viewing restriction of the corresponding content by matching the delivered information about the CR to the previously delivered information about the RS.

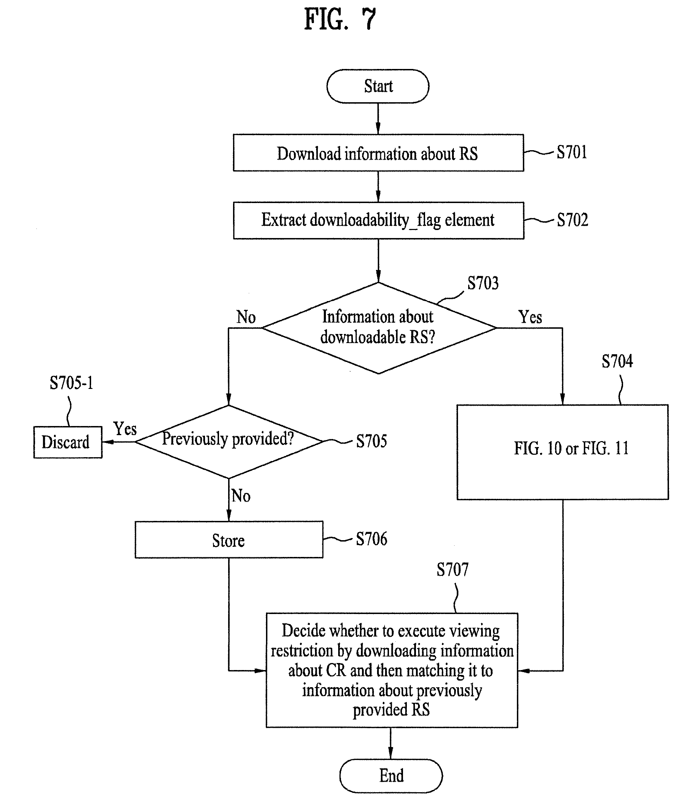

FIG. 7 is a flowchart of a process the in PUSH mode shown in FIG. 6.

Referring to FIG. 7, the IPTV receiver 620 downloads information about a RS from the service provider 610 via a connected network together with EPG metadata [S701].

By extracting downloadability_flag element contained in the downloaded information about the RS [S702], it is decided whether the received information about the RS is a downloadable RS or a fixed RS [5703] . In this case, by extracting rating_region element instead of the downloadability_flag element, it is able to decide a downloadable or fixed RS. Alternatively, by extracting both of the elements, it is able to make a corresponding decision.

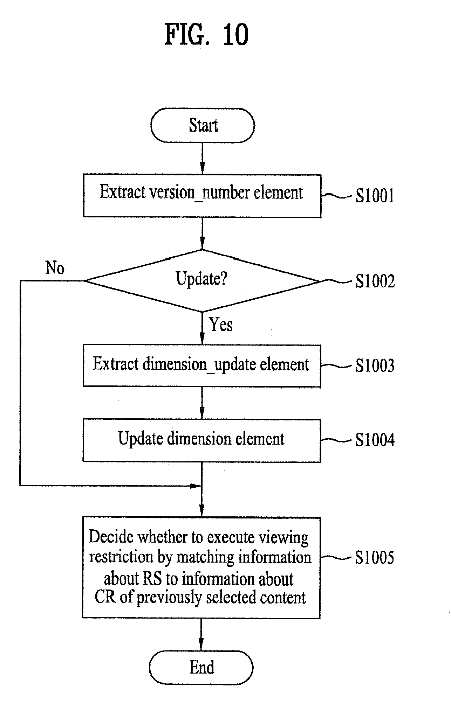

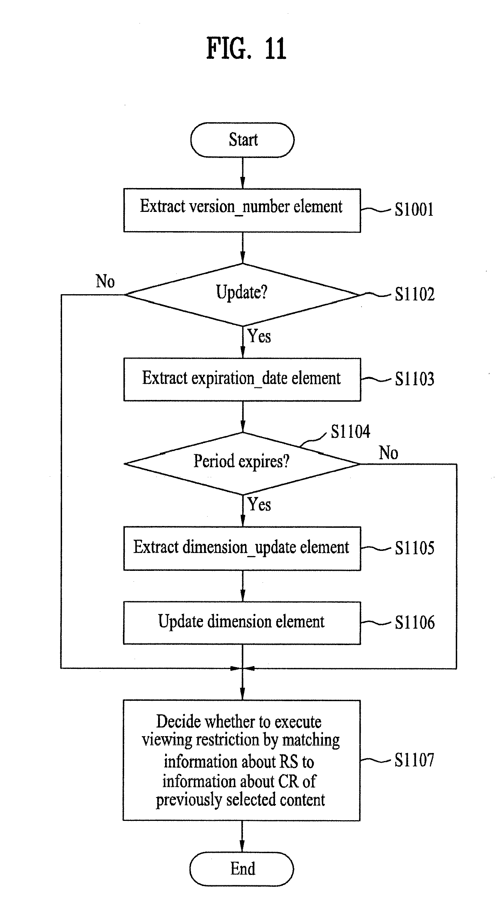

As a result of decision, if it is the downloadable RS, it is processed by a process for processing information about a downloadable RS in accordance with FIG. 10 or FIG. 11 [S704].

As a result of decision, if it is the fixed RS, it is decided whether it is previously provided to the receiver [S705]. As a result of the decision, if it is not previously provided to the receiver, it is stored [S706]. If it is previously provided to the receiver, it can be discarded [5705-1].

After completion of the steps S704 and S706, if information about a CR transmitted together with a user-selecting content is received, it is matched to the information about the RS for controlling contents viewing [S707].

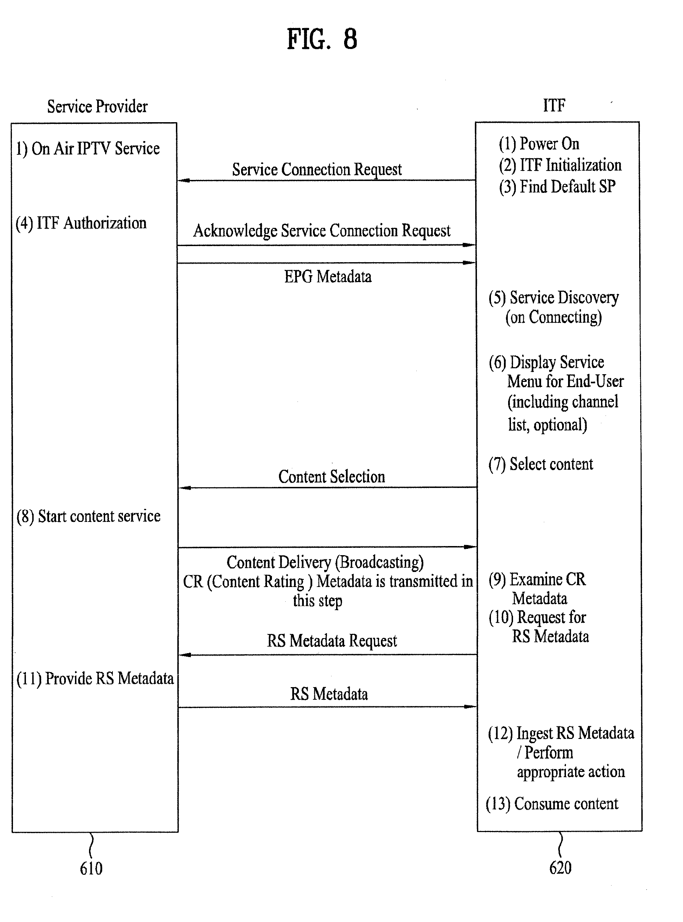

FIG. 8 is a block diagram to explain concept for transmission and reception in PULL mode according to one embodiment of the present invention. The PULL mode generally means a case that specific information is exchanged between a transmitter and a receiver via bidirectional communication in bidirectional communication enabled IPTV environment.

Referring to FIG. 8, if the IPTV receiver 620 is turned on and initialized, it makes a service connection request by accessing a network and then searching for a defaulted SP 610.

Subsequently, the SP 610 providing a corresponding IPTV service authenticates the corresponding IPTV receiver 620 and then transmits a corresponding acknowledgement signal for the service connection request and EPG metadata to the corresponding IPTV receiver 620.

The IPTV receiver 620 searches for the connected service and then displays a service menu to a user.

In this case, the displayed service menu can contain a channel list and options. If the user selects a specific content from the displayed service menu, the IPTV receiver 620 makes a request for a service of the corresponding content to the SP 610.

The SP 610 receives the request for the content service from the IPTV receiver 620 and starts a service for the corresponding content. In particular, the SP 610 delivers the content to the IPTV receiver 620 via broadcasting. In doing so, the SP 610 delivers information about a CR together with the delivered content.

The IPTV receiver 620 parses the delivered information about the CR and then decides whether there exists information about a previously provided RS which matches the parsed information about the CR.

As a result of the decision, if there is no matching information about the previously provided RS, the IPTV receiver 620 makes a request for a RS to the corresponding SP 610. If so, the SP 610 transmits the information about the RS in metadata format in response to the request.

The IPTV receiver 620 receives and stores the transmitted information about the RS and then decides whether to restrict viewing of the corresponding content by matching the received information to the information about the CR.

Yet, as a result of the decision, if there exists matching information about the previously provided RS, the IPTV receiver 620 is able to decide whether to restrict viewing the corresponding content using the matching information.

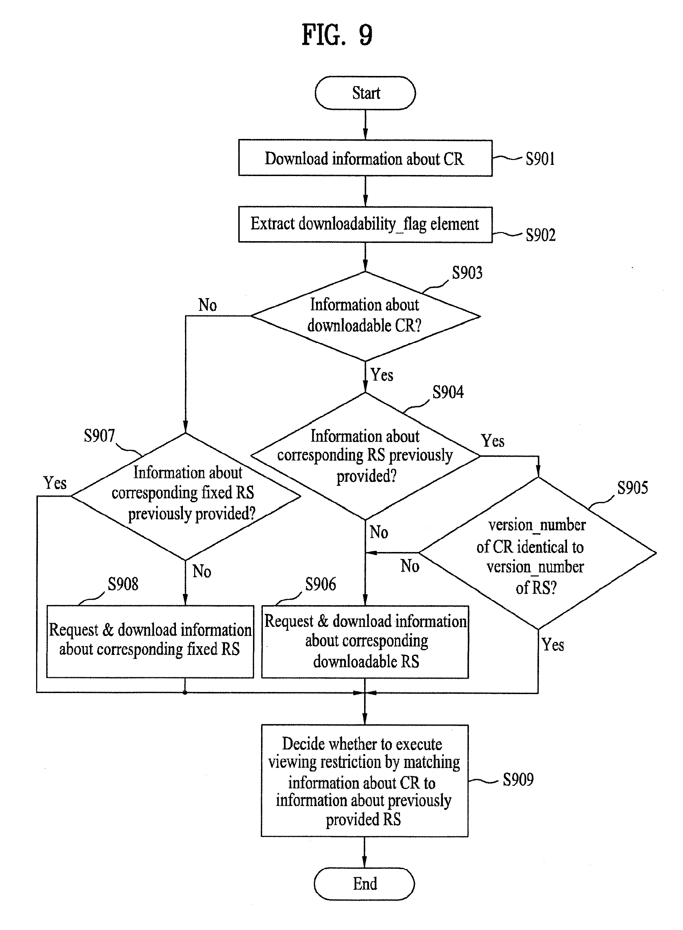

FIG. 9 is a flowchart for a process for receiving and processing information on a RS transmitted in the PULL mode shown in FIG. 8 according to one embodiment of the present invention;

Referring to FIG. 9, the IPTV receiver 620 downloads information about a CR from the service provider 610 via a connected network together with a selected content [S901], extracts downloadability_flag element contained in the downloaded information about the CR [S902], and then decides whether the received information about the corresponding CR is a downloadable CR or a fixed CR [S903]. In this case, by extracting rating_region element instead of the downloadability_flag element, it is able to decide a downloadable or fixed CR. Alternatively, by extracting both of the elements, it is able to make a corresponding decision.

As a result of decision, if it is the downloadable CR, it is decided whether information about a downloadable RS associated with the downloadable CR is previously provided to the receiver [S904].

As a result of the decision, if the information about the associated downloadable RS is previously provided to the receiver, it is decided whether version_number element of the information about the CR is identical to version_number element of the information about the previously provided downloadable RS [S905]. Alternatively, the version_number element can be replaced by released_time element or released_version element. Alternatively, it is able to make a corresponding decision by extracting both of the elements.

If both of the information is not identical to each other as a result of the decision in the step S905 or if the information about the associated RS is not previously provided as a result of the decision in the step S904, information about a downloadable RS is requested to the SP 610 and then downloaded [S907].

After completion of the step S907 or if the version_number elements of the two information are identical to each other in the step S905, a presence or non-presence of viewing restriction is decided by matching the two information [S909].

If it is not the information about the downloadable CR in the step S903, it is decided whether information about a fixed RS associated with information about a corresponding fixed CR is previously provided to the receiver [S907].

As a result of the decision in the step S907, if it is not previously provided to the received, the receiver makes a request for information about an associated fixed RS to the SP 610, downloads the requested information, stores the downloaded information [S908], and then decides whether to restrict viewing by matching both of the information [S909].

As a result of the decision in the step S907, if it is previously provided, the receiver decides whether to restrict viewing by matching both of the information [S909].

FIG. 10 is a flowchart of a process for processing information on a downloadable RS according to one embodiment of the present invention. In this case, the following process assumes information about a downloadable RS as a result of decision by extracting downloadability_flag element of information about a RS. In this case, it is able to make the decision by extracting rating_region element instead of the downloadability_flag element. Alternatively, it is able to make the decision by extracting both of the elements. For clarity, assume that a corresponding downloadable RS is previously provided to the receiver.

By extracting version_number element of the information about the downloadable RS [S1001], it is decided whether to perform an update [S1002]. Alternatively, the version_number element can be replaced by released_time element or released_version element. Alternatively, the decision can be made by extracting the respective elements entirely.

As a result of the decision, if there is an update for the information about the downloadable RS, dimension_update element within each dimension element is extracted [S1003]. The respective dimension elements are then updated [51004].

In this case, the dimension_update element extracted in the step S1003 can include information about a presence or non-presence of validity of a corresponding dimension element and/or information about a change, deletion, appending or insertion of the corresponding dimension element. Hence, according to one embodiment of the present invention for the update of the step S1004, it is decided whether the corresponding dimension element is valid using the extracted dimension_update element. As a result of the decision, if the corresponding dimension element is valid, a corresponding dimension element value is stored using the extracted dimension_update element by applying the information about the change, deletion, appending or insertion. It is then decided whether to perform viewing restriction by matching information about a CR received together with a content previously selected by a user to the information (dimension element) about the updated RS [S1005].

As a result of the update decision in the step S1002, if there is no update, information about a corresponding downloadable RS is discarded. By matching the information about the CR using the information about the previously provided RS, viewing restriction is put on a serviced content.

FIG. 11 is a flowchart of a process for processing information on a downloadable RS according to another embodiment of the present invention. This is another embodiment for FIG. 10 and includes the same assumption and process of the former embodiment shown in FIG. 10.

Referring to FIG. 11, by extracting version_number element of the information about the downloadable RS [S1001], it is decided whether to perform an update [51002]. Alternatively, the version_number element can be replaced by released_time element or released_version element. Alternatively, the decision can be made by extracting the respective elements entirely.

As a result of the decision, if there is an update for the information about the downloadable RS, by extracting expiration_date element of the information about the downloadable RS [S1103], it is decided whether an update available period expires [S1104].

As a result of the decision, if the update available period does not expire, the information about the downloadable RS is discarded. As a result of the decision, if the update available period expires, dimension_update element within each dimension element of the information about the downloadable RS is extracted [S1005] and then each dimension element is updated [S1006]. In this case, the dimension_update element extracted in the step S1105 can include information about a presence or non-presence of validity of a corresponding dimension element and/or information about a change, deletion, appending or insertion of the corresponding dimension element.

As one embodiment of the update in the step S1106 according to the present invention is identical to the former embodiment shown in FIG. 10, the description of the former embodiment shown in FIG. 10 is quoted to omit details.

Whether to execute viewing restriction is decided by matching information about a CR received together with a content previously selected by a user to the updated dimension element [S1107].

As a result of the update decision in the step S1102, if there is no update, information about a corresponding downloadable RS is discarded. By matching the information about the CR using the information about the previously provided RS, viewing restriction is put on a serviced content.

Alternatively, it is able to decide the expiration_date element prior to the step S1101.

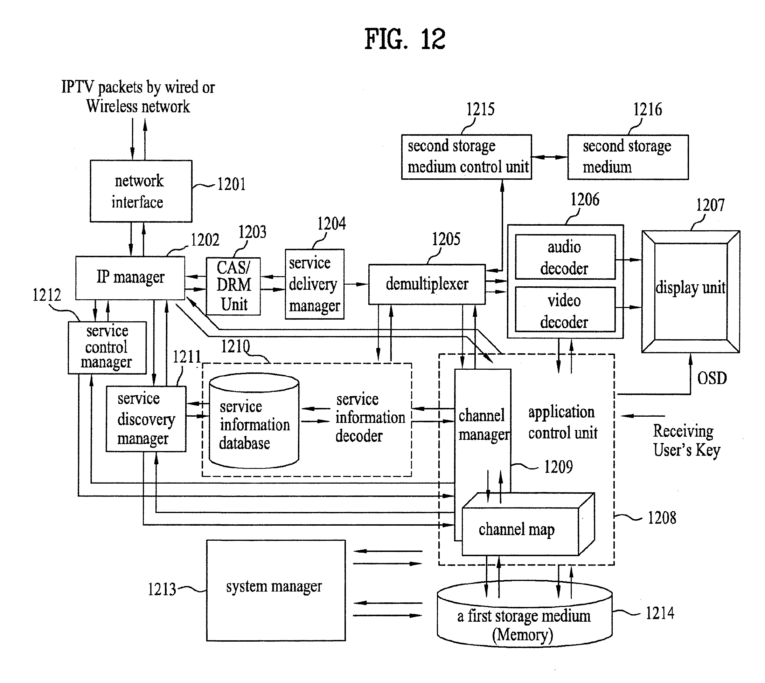

FIG. 12 is an exemplary block diagram of an IPTV receiver.

Referring to FIG. 12, the IPTV receiver may include a network interface 1201, an IP manager 1202, a conditional access system/digital rights management (CAS/DRM) unit 1203, a service delivery manager 1204, a demultiplexer 1205, an audio/video decoder 1206, a display unit 1207, an application control unit 1208, a channel manager 1209, a service information decoder 1210, a service discovery manager 1211, a service control manager 1212, a system manager 1213, a first storage medium 1214, a second storage medium control unit 1215, and a second storage medium 1216.

The network interface 1201 plays a role in connecting the receiver to a network for services and is able to receive/transmit packets via the connected network.

The IP manager 1202 is able to manage a delivery of a packet, which is received or transmitted via the connected network, from a source to a destination. Namely, the IP manager 1202 is ale to sort the corresponding packet to cope with a suitable protocol.

The CAS/DRM unit 1203 is responsible for a function of a conditional access of a service and a function associated with digital copyright management. In particular, the CAS/DRM unit 1203 receives a packet, which was received from the network connected via the network interface 1201 in association with a service, via the IP manager 1202. If a conditional access is applied to the corresponding packet or if a restriction associated with digital copyright management is applied to the corresponding packet, the CAS/DRM unit 1203 is able to release the conditional access or the restriction from the corresponding packet. Namely, the CAS/DRM unit 1203 accesses a received packet or is responsible for a packet control through redistribution.

The service delivery manager 1204 is responsible for handling real-time streaming data. In this case, RTP/RTCP (real-time transport protocol/RTP control protocol) is usable for MPEG-2 transport stream. Namely, the MPEG-2 packets are capsulated in the RTP. So, the service delivery manager 1204 parses the RTP packets and then transports a capsulated MPEG-2 packet, which is capsulated as a result of the parsing, to the demultiplexer 1205. And, the service delivery manager 1204 is able to transport a feedback for a quality of network reception using the RTCP. In this case, the MPEG-2 transport packets can be directly delivered to user datagram protocol (UDP) without the RTP.

The demultiplexer 1205 demultiplexes audio, video and program specific information (PSI) tables from the received transport stream packets. In this case, the demultiplexer 1205 demultiplexes the PSI tables under the control of a PSI decoder and also demultiplexes the audio/video transport packets under the control of the channel manager 1209. And, the demultiplexer 1205 creates a section of the demultiplexed PSI tables and then transfers the section to the PSI decoder.

The audio/video decoder 1206 receives the demultiplexed audio/video packets from the demultiplexer 1205 and then processes the received packets.

The display unit 1207 receives an audio/video signal processed by the audio/video decoder 1206 and then displays the received signal.

The application controller unit 1208 supports a graphic user interface (GUI) on the display unit 1207 for a user. The application controller unit 1208 receives a user's input via an external input means such as a remote controller or a front panel. If the user's input is associated with a channel selection, the application controller unit 1208 forwards the input to the channel manager 1209. And, the application controller unit 1208 is able to control key states of an overall system of the receiver or enables setup data to be stored in the first storage medium 1214.

The channel manager 1209 creates a channel map or controls the service discovery manager 1211. The channel manager 1209 makes a request for channel information to the service information decoder 1210 or resets the service information decoder 1210. And, the channel manager 12009 sets a corresponding Packet IDentifier (PID) in the demultiplexer 1205 to enable to receive the audio/video packet.

The service information decoder 1210 is a module for controlling such service information as PSI/PSIP/DVB-SI(Program Specific Information/Program and System Information Protocol/Digital Video Broadcasting-Service Information). And, the service information decoder 1210 performs a slave operation under the control of the channel manager 1209. The service information decoder 1210 sets a corresponding PID in the demultiplexer 1205 to enable to demultiplex the service information such as the PSI/PSIP/DVB-SI. The service information decoder 1210 receives and processes the service information relevant section created by the demultiplexer 1205 in accordance with the setup. And, the service information decoder 1210 receives service information from the service delivery manager 1204 and then creates a service information database for a broadcast service.

The service discovery manager 1211 discovers IPTV services via an interactive IP network and then enables the discovered IPTV services. And, the service discovery manager 1211 provides all information for a selected service.

The service control manager 1212 is responsible for selections and controls of services. For instance, the service control manager 1212 selects a live broadcast service using Internet Group Management Protocol (IGMP) or Real-Time Streaming Protocol (RTSP) or selects Video on Demand (VoD) contents using the RTSP. In this case, the RTSP is used in controlling the delivery of TV/audio directly delivered or broadcasted. And, the RTSP is used for a continuous Transmission Control Procedure (TCP) connection or in allowing a trick mode control for real-time broadcasting media string.

The system manager 1213 controls a boot flow in accordance with on/of of a power of the receiver system and writes or stores read only memory (ROM) image including a downloaded software image in the first storage medium 1214.

The first storage medium 1214 stores data setup for the system and the like therein. A non-volatile memory (non-volatile RAM: NVRAM), a flash memory or the like is used as the first storage medium 1214.

The second storage medium 1216 temporarily stores a signal transferred from the demultiplexer 1205 or the audio/video decoder 1206 and then transfers back the stored signal to the demultiplexer 1205 or the audio/video decoder 2006. In this case, the second storage medium 1216 writes data from the received signal, stores the signal, and provides the signal to the demultiplexer 1205, under the control of the second storage control unit 1215.

A receiver according to the present invention receives information about RS and CR, which is configured in a metadata format according to the present invention and included in EP metadata transmitted by a service provider via an accessed network, via a network interface 1201. After the information has been received, an application control unit 1208 controls the received information about the RS and the received information about the CR to be stored or updated via an IP manager 1202 and a service control manager 1212 and also controls the informations to be displayed to a user.

Moreover, a user is enabled to decide whether to execute viewing restriction using the displayed information about the RS and the displayed information about the CR.

Accordingly, the present invention provides the following effects or advantages. First of all, information about rating can be represented and transmitted/received in an IPTV environment. Secondly, the present invention solves the problems occurring in the transmission/reception of the conventional information about rating. Thirdly, the present invention enables necessary information about rating to be selectively received instead of receiving information about rating unilaterally, thereby raising system efficiency by reducing load put on a reception system.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for processing rating information in an internet protocol television (IPTV) receiver, the method comprising:
downloading content and first rating information identifying rating values of the content, wherein the first rating information includes information identifying whether the first rating information is newly downloadable;
downloading second rating information defining rating types defined for rating systems in accordance with the received first rating information, wherein the second rating information includes information identifying whether the second rating information is downloadable; and
decoding the received content, the first rating information, and the second rating information.

2. The method of claim 1, wherein the first rating information further includes information identifying a region which is the first rating information is applied.

3. The method of claim 1, wherein the first rating information further includes at least one of information identifying version of the first information and information identifying time released of the first rating information.

4. The method of claim 1, wherein the second rating information further includes information identifying a region of the second rating information is applied.

5. The method of claim 1, wherein the second rating information further includes at least one of information identifying version of the second rating information and information identifying time released of the second rating information.

6. The method of claim 5, wherein the second rating information further includes information defining a time during which a new download of the second rating information is limited.

7. The method of claim 5, wherein the second rating information further includes information identifying whether the rating types is changed.

8. The method of claim 7, wherein the change includes which rating value of one or more of rating types is at least one of deletion, appendage, modification, and insertion.

9. A method for processing rating information in an internet protocol television (IPTV) receiver, the method comprising:
downloading first rating information defining rating types defined for rating systems, wherein the first rating information includes information identifying whether the first rating information is newly downloadable;
downloading content and second rating information identifying rating values of the content, wherein the second rating information includes information identifying whether the second rating information is downloadable; and
decoding the received content, the first rating information, and the second rating information.

10. The method of claim 9, wherein the first rating information further includes information identifying a region of the first information is applied.

11. The method of claim 9, wherein the first rating information further includes at least one of information identifying version of the first rating information and information identifying time released of the first rating information.

12. The method of claim 11, wherein the first rating information further includes information defining a time during which a new download of the first rating information is limited.

13. The method of claim 11, wherein the first rating information further includes information identifying whether the rating types is changed.

14. The method of claim 13, wherein the change includes which rating value in one or more of rating types is at least one of deletion, appendage, modification, and insertion.

15. The method of claim 9, wherein the second rating information further includes information identifying a region which is the second rating information is applied.

16. The method of claim 15, wherein the second rating information further includes at least one of information identifying version of the first rating information and information identifying time released of the second rating information.

17. An internet protocol television (IPTV) receiver, the receiver comprising:
an interface for transmitting/downloading IPTV packets via the connected network;
a demultiplexer for demultiplexing the downloaded IPTV packets, wherein the demultiplexed IPTV packets includes content, first rating information identifying rating values of the content, and second rating information defining rating types defined for rating systems in accordance with the first rating information, wherein the first rating information includes information identifying whether the first rating information is newly downloadable and the second rating information includes information identifying whether the second rating information is newly downloadable;
a decoder for decoding the demultiplexed content, the first rating information, and the second rating information; and
a controller for controlling to decode the content, the first rating information, and the second rating information.

18. The IPTV receiver of claim 17, further comprising:
a storage medium for temporarily storing the decoded content, the first rating information, and the second rating information;
a display unit for displaying the decoded content.

19. The IPTV receiver of claim 17, wherein the controller determines whether the downloaded first rating information is newly downloadable.

20. The IPTV receiver of claim 19, wherein the controller controls to receive the second rating information if the second rating information in accordance with the received first information is not stored in the IPTV receiver.
